# EUROPEAN PATENT APPLICATION

(11) **EP 1 965 290 A1**
(43) Date of publication of application: **03.09.2008**
(21) Application number: 07103178.5
(22) Date of filing: 27.02.2007
(51) Int. Cl.: G06F 3/023

(54) **Electronic device and information input method**

(71) Applicant: Inventec Corporation, 111 Taipei (TW)
(72) Inventor: Yang, Tsung-Cheng, 111, Shih-Lin District, Taipei (TW)
(74) Representative: 2K Patentanwälte Kewitz & Kollegen

(57) **Abstract**

An infonnation input method applied to an electronic device, which includes a host body, a first direction key module and a second direction key module, includes the following steps. First, the first direction key module generates a first input signal, a second input signal, a third input signal, a fourth input signal, or a fifth input signal; otherwise, the second direction key module generates a sixth input signal, a seventh input signal, an eighth input signal, a ninth input signal, or a tenth input signal. Next, the host body receives one of the input signals. Finally, the host body generates a first standard key signal, a second standard key signal, a third standard key signal, a fourth standard key signal, a fifth standard key signal, a sixth standard key signal, a seventh standard key signal, an eighth standard key signal, a ninth standard key signal or a tenth standard key signal according to the received input signal.

## Description

### BACKGROUND OF THE INVENTION

### Field of Invention

The invention relates to an electronic device and an information input method, and, in particular, to an electronic device and an information input method applying direction key modules.

### Related Art

With the development of the technology, many electronic products are becoming miniaturized such that portable electronic devices, e.g. notebook computers, personal digital assistants (PDAs) and mobile communication devices are getting smaller each generation. Recently, personal digital assistants and mobile communication devices are advancing with regard to features while miniaturizing especially rapidly so that a user may carry the device conveniently.

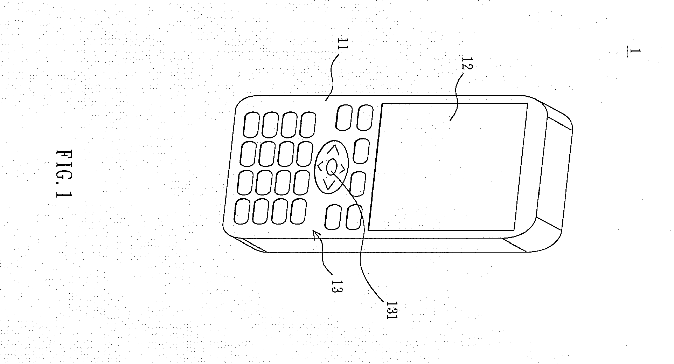

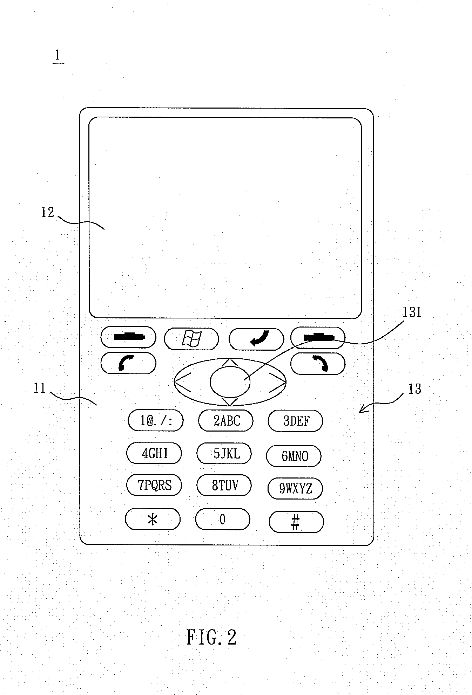

In general, an electronic device usually has an input interface through which the user may input information. Taking the mobile communication device as an example, as shown in FIGS. 1 and 2, the conventional mobile communication device 1 mainly includes a host body 11, a display module 12 and an input interface 13. The mobile communication device 1 inputs information through the input interface 13. Herein, the input interface 13 is a standard keyboard satisfying Consultative Committee of International Telegraph & Telephone (CCITT) specifications and including keys of "0", "1", "2", "3", "4", "5", "6", "7", "8", "9", "*" and "#". Thus, the user can dial a phone number using the input interface 13. The input interface 13 may further include an "answer key" and a "hang-up key" for assisting the user in making a phone call, answering a call and hanging up a call using this mobile communication device 1.

In addition, the input interface 13 may further include several function keys, such as left and right soft keys, "Home" key or "OK" key. Furthermore, the input interface 13 may further include a direction key module 131.

Because the standard keyboard satisfying CCITT specifications has become the unified specifications for all communication apparatuses, almost all software input methods are designed according to the input interface serving as the standard keyboard. Applications of several input modes will be illustrated in the following. For example, when the input interface 13 is in the numeric input mode, these keys may be used to input "0", "1", "2", "3", "4", "5", "6", "7", "8", "9", "*" or "#". In addition, when the input interface 13 is in the English letter input mode, these keys may be used to input "0", "@ . / :", "A B C", "D E F", "G H I", "J K L", "M N O", "P Q R S", "T U V", "W X Y Z", "*", or "#". As for the input of "A B C" corresponding to a certain key, "A" will be inputted if the key is pressed once, "B" will be inputted if the key is pressed twice continuously, and "C" will be inputted if the key is pressed three times continuously. Other information input methods corresponding to other keys have the similar operations. Furthermore, when the input interface 13 is in the Chinese input mode, these keys may be used to input the Mandarin phonetic symbols " 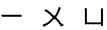 ", " 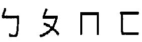 ", " 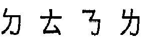 ", " 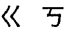 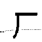 ", " 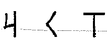 ", " 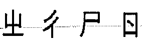 ", " 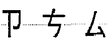 ", " 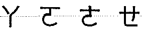 ", " 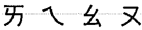 ", " 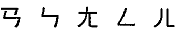 ", "^{∗}", or "#". As for the input of " 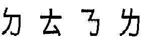 " corresponding to a certain key, " 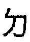 " will be inputted if the key is pressed once, " 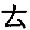 " will be inputted if the key is pressed twice continuously, " 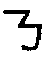 " will be inputted if the key is pressed three times continuously and " 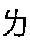 " will be inputted if the key is pressed four times continuously. Other information input methods corresponding to other keys have the similar operations. In addition, the direction key module 131 is a five way key module having five operation directions including an upward direction, a downward direction, a leftward direction, a rightward direction and a vertically downward direction, through which the user can use a menu function to rapidly operate the mobile communication device 1. For example, the upward direction enables the user to skip to the previous menu data, the downward direction enables the user to skip to the next menu data, the leftward direction enables the user to skip to the left menu data, the rightward direction enables the user to skip to the right menu data, and the vertically downward direction enables the selection of a certain piece of menu data, with a function similar to the "OK" key.

However, the mobile communication device 1 has to allow input of complex information of many types and modes through the input interface 13, so the design of the input interface 13 cannot be easily simplified. Thus, it is an important subject of the invention to provide an information input method capable of inputting information via a simplified input interface, and an electronic device with an interface capable of effective, simplified input.

### SUMMARY OF THE INVENTION

In the view of the foregoing, the invention is to provide an information input method capable of inputting information using a simplified input interface.

In addition, the invention is also to provide an electronic device with a simplified and efficient input interface.

To achieve the above, the invention discloses an information input method applied to an electronic device, which includes a host body, a first direction key module and a second direction key module. The host body is electrically connected to the first direction key module and the second direction key module. The information input method includes the following steps. First, the first direction key module generates a first input signal, a second input signal, a third input signal, a fourth input signal, or a fifth input signal; otherwise, the second direction key module generates a sixth input signal, a seventh input signal, an eighth input signal, a ninth input signal, or a tenth input signal. Next, the host body receives one of the input signals. Finally, the host body generates a first standard key signal, a second standard key signal, a third standard key signal, a fourth standard key signal, a fifth standard key signal, a sixth standard key signal, a seventh standard key signal, an eighth standard key signal, a ninth standard key signal or a tenth standard key signal according to the received input signal.

To achieve the above, the invention also discloses an electronic device, which includes a host body, a first direction key module and a second direction key module. The first key direction module and the second direction key module are electrically connected to the host body. The first direction key module generates a first input signal, a second input signal, a third input signal, a fourth input signal, or a fifth input signal. The second direction key module generates a sixth input signal, a seventh input signal, an eighth input signal, a ninth input signal or a tenth input signal. When receiving one of the input signals, the host body generates a first standard key signal, a second standard key signal, a third standard key signal, a fourth standard key signal, a fifth standard key signal, a sixth standard key signal, a seventh standard key signal, an eighth standard key signal, a ninth standard key signal, or a tenth standard key signal according to the first input signal, the second input signal, the third input signal, the fourth input signal, the fifth input signal, the sixth input signal, the seventh input signal, the eighth input signal, the ninth input signal or the tenth input signal.

In summary, the information input method and the electronic device of the invention simulate the conventional standard keyboard, such as the CCITT-compliant standard keyboard, by the signals inputted by the two direction key modules of the electronic device. Thus, the design of the input interface of the electronic device can be effectively simplified without modifying other designs of the electronic device. Compared with the prior art, the information input method and the electronic device according to the invention can simplify the design of the input interface so as to reduce the overall size of the electronic device effectively. In addition, the invention only utilizes the two direction key modules to input the information, so the user can operate the device rapidly and conveniently.

### BRIEF DESCRIPTION OF THE DRAWINGS

The invention will become more fully understood from the detailed descriptions given below, and is not limited to the present invention, and wherein:

FIGS. 1 and 2 are schematic illustrations showing a conventional mobile communication device;

FIG. 3 is a schematic illustration showing an electronic device according to a preferred embodiment of the invention;

FIG. 4 is a flow chart showing an information input method according to the preferred embodiment of the invention;

FIG. 5 is a schematic illustration showing a schematic illustration showing another electronic device according to the preferred embodiment of the invention; and

FIG. 6 is a schematic illustration showing flows of inputting a Chinese word in the information input method performed using the electronic device of FIG. 5.

### DETAILED DESCRIPTION OF THE INVENTION

The present invention will be explained in detailed with reference to the drawings.

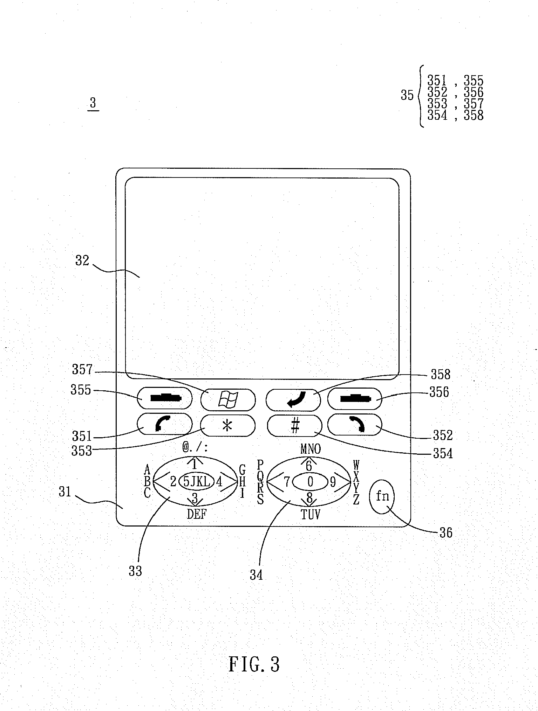

Referring to FIG. 3, an information input method according to the preferred embodiment of the invention is applied to an electronic device 3 including a host body 31, a display module 32, a first direction key module 33 and a second direction key module 34. The host body 31 is electrically connected to the display module 32, the first direction key module 33 and the second direction key module 34. In this embodiment, each of the first direction key module 33 and the second direction key module 34 is a five-way key module, which may be operated in an upward direction, a leftward direction, a downward direction, a rightward direction and a vertically downward direction. In addition, the electronic device 3 may further include a plurality of auxiliary keys 35, such as an answer key 351, a hang-up key 352, a "*" key 353, a "#" key 354, a left soft key 355, a right soft key 356, a "Home" key 357 and an "OK" key 358, disposed on the host body 31. It should be noted that the electronic device 3 of this embodiment is not limited to a bar-type mobile communication device. The electronic device herein may also be flip-type, slide-type, rotatable type. In addition, the electronic device of the invention may also another type of electronic device, such as a personal digital assistant (PDA), an MP3 player or a notebook computer.

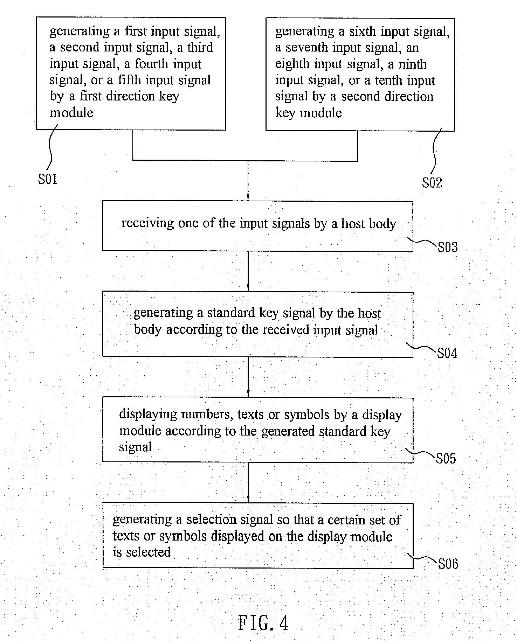

Referring to FIG. 4, the information input method of this embodiment includes steps S01 to S06.

In step S01, the first direction key module 33 first generates a first input signal, a second input signal, a third input signal, a fourth input signal, or a fifth input signal. In addition, in step S02, the second direction key module 34 generates a sixth input signal, a seventh input signal, an eighth input signal, a ninth input signal, or a tenth input signal. In this embodiment, the first direction key module 33 generates the first input signal when it is operated in an upward direction, generates the second input signal when it is operated in a leftward direction, generates the third input signal when it is operated in a downward direction, generates the fourth input signal when it is operated in a rightward direction, and generates the fifth input signal when it is operated in a vertically downward direction. In addition, the second direction key module 34 generates the sixth input signal when it is operated in the upward direction, generates the seventh input signal when it is operated in the leftward direction, generates the eighth input signal when it is operated in the downward direction, generates the ninth input signal when it is operated in the rightward direction, and generates the tenth input signal when it is operated in the vertically downward direction.

Next, in step S03, the host body 31 receives one of the input signals, such as the first input signal, the second input signal, the third input signal, the fourth input signal, the fifth input signal, the sixth input signal, the seventh input signal, the eighth input signal, the ninth input signal or the tenth input signal.

Then, in step S04, the host body 31 generates a standard key signal according to the received input signal. In this embodiment, the host body 31 generates a first standard key signal when it receives the first input signal, generates a second standard key signal when it receives the second input signal, generates a third standard key signal when it receives the third input signal, generates a fourth standard key signal when it receives the fourth input signal and generates a fifth standard key signal when it receives the fifth input signal. The host body 31 generates a sixth standard key signal when it receives the sixth input signal, generates a seventh standard key signal when it receives the seventh input signal, generates an eighth standard key signal when it receives the eighth input signal, generates a ninth standard key signal when it receives the ninth input signal, and generates a tenth standard key signal when it receives the tenth input signal.

Next, in step S05, the display module 32 displays according to the generated standard key signal. Herein, the display module 32 may display numbers, texts, symbols or the like.

As mentioned above, the first input signal, the second input signal, the third input signal, the fourth input signal, the fifth input signal, the sixth input signal, the seventh input signal, the eighth input signal, the ninth input signal and the tenth input signal respectively correspond to a plurality of input signals of a standard keyboard satisfying the CCITT specifications. More specifically, the first input signal is a key "1" signal, the second input signal is a key "2" signal, the third input signal is a key "3" signal, the fourth input signal is a key "4" signal, the fifth input signal is a key "5" signal, the sixth input signal is a key "6" signal, the seventh input signal is a key "7" signal, the eighth input signal is a key "8" signal, the ninth input signal is a key "9" signal, and the tenth input signal is a key "0" signal. As mentioned above, the first direction key module 33 and the second direction key module 34 can replace ten numeric keys of the conventional standard keyboard.

Therefore, the first input signal is generated when the upward direction of the first direction key module 33 is operated. The first input signal is same as the generated input signal by the press of the physical key "1" of the conventional standard keyboard. The second input signal is generated when the leftward direction of the first direction key module 33 is operated. The second input signal is the same as the generated input signal by the press of the physical key "2" of the conventional standard keyboard. The third input signal is generated when the downward direction of the first direction key module 33 is operated. The third input signal is the same as the generated input signal by the press of the physical key "3" of the conventional standard keyboard. The fourth input signal is generated when the rightward direction of the first direction key module 33 is operated. The fourth input signal is the same as the generated input signal by the press of the physical key "4" of the conventional standard keyboard. The fifth input signal is generated when the vertically downward direction of the first direction key module 33 is operated. The fifth input signal is the same as the generated input signal by the press of the physical key "5" of the conventional standard keyboard. The sixth input signal is generated when the upward direction of the second direction key module 34 is operated. The sixth input signal is the same as the generated input signal by the press of the physical key "6" of the conventional standard keyboard. The seventh input signal is generated when the rightward direction of the second direction key module 34 is operated. The seventh input signal is the same as the generated input signal by the press of the physical key "7" of the conventional standard keyboard. The eighth input signal is generated when the downward direction of the second direction key module 34 is operated. The eighth input signal is the same as the generated input signal by the press of the physical key "8" of the conventional standard keyboard. The ninth input signal is generated when the leftward direction of the second direction key module 34 is operated. The ninth input signal is the same as the generated input signal by the press of the physical key "9" of the conventional standard keyboard. The tenth input signal is generated when the vertically downward direction of the second direction key module 34 is operated. The tenth input signal is the same as the generated input signal by the press of the physical key "0" of the conventional standard keyboard.

Thus, in step S05, when the electronic device 3 is in a numeric input mode, the display module 32 respectively displays the digits "1", "2", "3", "4", "5", "6", "7", "8", "9" and "0" according to the first standard key signal, the second standard key signal, the third standard key signal, the fourth standard key signal, the fifth standard key signal, the sixth standard key signal, the seventh standard key signal, the eighth standard key signal, the ninth standard key signal and the tenth standard key signal.

In addition, in step S05, when the electronic device 3 is in a alphabetical input mode, the display module 32 respectively displays plural sets of alphabetical signals according to the first standard key signal, the second standard key signal, the third standard key signal, the fourth standard key signal, the fifth standard key signal, the sixth standard key signal, the seventh standard key signal, the eighth standard key signal, the ninth standard key signal and the tenth standard key signal. For example, when the electronic device 3 is in an English letter input mode, the display module 32 respectively displays the English letters including "A B C", "D E F", "G H I", "J K L", "M N O", "P Q R S", "T U V", "W X Y Z" and "@ . , / :" in correspondence with the standard key signals. In addition, when the electronic device 3 is in a Chinese input mode, the display module 32 respectively displays the Mandarin phonetic symbols including " 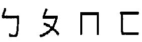 ", " 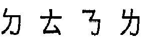 ", " 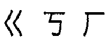 ", " 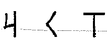 ", " 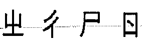 ", " 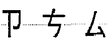 ", " 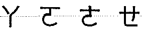 ", " 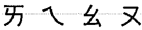 ", " 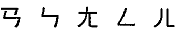 " and " 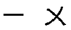 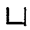 " in correspondence with the standard key signals.

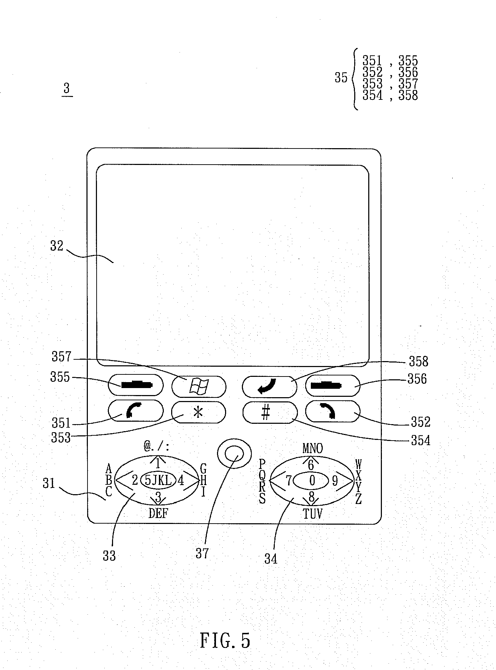

Finally, in step S06, a selection signal is generated so that a certain set of texts or symbols displayed on the display module 32 may be selected. For example, when the display module 32 displays the Mandarin phonetic symbols " 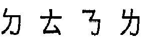 ", " 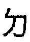 " may be selected according to the selection signal generated in step S06. In this embodiment, the user may press a function key 36 (see FIG. 3) or operate a third direction key module 37 (see FIG. 5) to generate the selection signal and select the required text or symbol.

According to the information input method of the invention, the user may use two direction key modules in conjunction with any conventional input method to input the required information. In order to make the contents of the invention clearer, several examples will be illustrated to describe the operating steps of inputting information using the first direction key module 33 and the second direction key module 34. First, the first operation example is described by taking the numeric input mode as an example. That is, the input signals correspondingly inputted when the user operates the first direction key module 33 and the second direction key module 34 represent plural sets of digit signals, such as "1", "2", "3", "4", "5", "6", "7", "8", "9" and "0". Thus, when the user wants to make a phone call to "0912345678", as shown in FIG. 3 or 5, the user only has to operate the second direction key module 34 vertically downward and then rightward to input "0" and "9" sequentially. Then, the user operates the first direction key module 33 upward, leftward, downward, rightward and then vertically downward to sequentially input "1", "2", "3", "4" and "5". Finally, the user operates the second direction key module 34 upward, leftward and then downward to sequentially input "6", "7" and "8" so that the phone number of "0912345678" can be inputted. At this time, the display module 32 displays the information (not shown) corresponding to the inputted phone number. Then, the user only has to press the left soft key 355 or the "OK" key 358 to finish the operation of dialing the phone number.

As mentioned above, the user can input other types of information, such as the Mandarin phonetic symbols and the English letter signals, through the first direction key module 33 and the second direction key module 34. In this embodiment, the user can switch the type of the input mode of the electronic device 3 using the function key 36. For example, the input mode may be switched from the numeric input mode into the Chinese input mode or the English letter input mode.

For example, in the second operation example, the user first presses the function key 36 to switch the type of the input mode of the electronic device 3 from the numeric input mode to the English letter input mode. More specifically, the input signals correspondingly inputted when the user is operating the first direction key module 33 and the second direction key module 34 represent plural sets of English letter signals, such as "A B C", "D E F", "G H I", "J K L", "M N O", "P Q R S", "T U V", "W X Y Z", and "@ . , / :". As shown in FIG. 3, when the user operates the first direction key module 33 upward, leftward, downward, rightward, or vertically downward, "@ . , / :", "A B C", "D E F", "G H I", or "J K L" is correspondingly inputted. In addition, when the user operates the second direction key module 34 upward, leftward, downward, or rightward, "M N O", "P Q R S", "T U V", or "W X Y Z" is correspondingly inputted. If the user operates the first direction key module 33 leftward once, "A" is inputted. If the user operates the first direction key module 33 leftward twice continuously, "B" is inputted. If the user operates the first direction key module 33 leftward three times continuously, "C" is inputted. Other information input methods also operate in the similar manner. Thus, if the user wants to input an English message "GOOD", he or she only has to operate the first direction key module 33 rightward once and operate the second direction key module 34 upward three times continuously, then operate the second direction key module 34 upward three times continuously, and finally operate the first direction key module 33 downward once to complete the input of the English message "GOOD". At this time, the display module 32 correspondingly displays the information (not shown) of the inputted English message.

As mentioned hereinabove, the electronic device 3 may also provide other text input functions, such as for the input of Mandarin phonetic symbols, and one of ordinary skill in the art may easily apply the above-mentioned flows to the input of other texts. So, the following example of inputting a Mandarin phonetic symbol is illustrated, and other text inputting applications will not be described in detail.

As shown in FIG. 5, the input signals correspondingly input when the user operates the first direction key module 33 and the second direction key module 34 are used to represent plural sets of Mandarin phonetic symbols, such as " 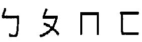 ", " 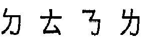 ", " 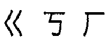 ", " 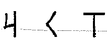 ", " 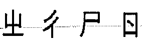 ", " 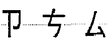 ", " 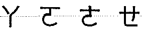 ", " 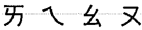 ", " 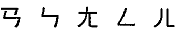 ", and " 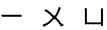 ". Because the number (37) of Mandarin phonetic symbols is greater than that of the English alphabet, inputting the information only using the first direction key module 33 and the second direction key module 34 may cause the user more trouble. Thus, this embodiment utilizes the third direction key module 37 to assist in verifying the input signal inputted by the first direction key module 33 or the second direction key module 34 to enhance the ease of use. In order to make the contents of the invention clearer, an operation example will be illustrated to describe the operation flows of inputting the information using the first direction key module 33, the second direction key module 34 and the third direction key module 37.

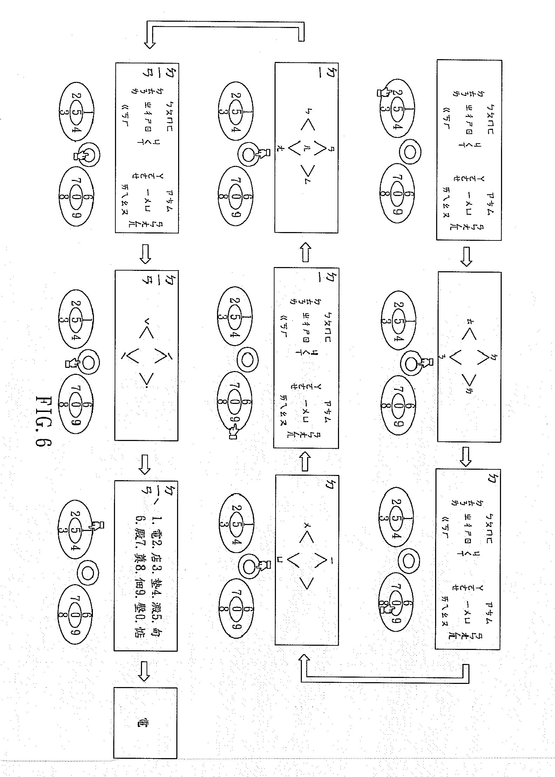

FIG. 6 is a schematic illustration showing flows of inputting a Chinese word in the information input method performed using the electronic device of FIG. 5. Each step displays a portion of the frame displayed by the display module 32 and a portion of the direction key module. In this operation example, a Chinese word " 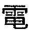 " to be inputted is described as an example. That is, the symbols " 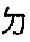 ", " 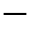 ", " 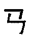 " and " 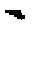 " have to be inputted. First, the user operates the first direction key module 33 leftward once. At this time, a portion of the frame displayed by the display module 32 is changed to " 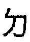 ", " 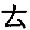 ", " 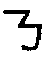 ", " 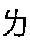 ". Then, the user operates the third direction key module 37 upward once so that " 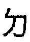 " is selected. Next, the user operates the second direction key module 34 vertically downward once. At this time, the portion of the frame displayed by the display module 32 is changed to " 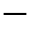 ", " 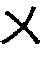 ", " 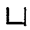 ". Then, the third direction key module 37 is operated upward once so that "-" is selected. Thereafter, the user operates the second direction key module 34 rightward once, and the portion of the frame displayed by the display module 32 is changed to " 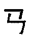 ", " 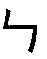 ", " 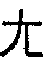 ", " 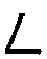 ", " 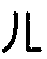 ". Then, the third direction key module 37 is operated upward once so that " 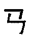 " is selected. Thereafter, the third direction key module 37 is operated vertically downward and the display module 32 displays the accent such as a first tone, a second tone, a third tone, a fourth tone or a fifth tone. At this time, the third direction key module 37 may be operated downward once to select the fourth tone. Then, the display module 32 displays the Chinese words satisfying the inputted Mandarin phonetic symbols. Finally, the first direction key module 33 is operated once to select "1" to select the Chinese word " 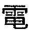 ".

It is to be noted that the electronic device 3 according to the preferred embodiment of the invention may be properly designed to input other simple or complicated texts, such as Japanese, or to input other information in conjunction with software according to other steps.

In summary, the information input method and the electronic device of the invention simulate the conventional standard keyboard, such as the CCITT-compliant standard keyboard, by the signals inputted by the two direction key modules of the electronic device. Thus, the design of the input interface of the electronic device can be effectively simplified without modifying other designs of the electronic device. Compared with the prior art, the information input method and the electronic device according to the invention can simplify the design of the input interface so as to reduce the overall size of the electronic device effectively. In addition, the invention only utilizes the two direction key modules to input the information, so the user can operate the device rapidly and conveniently. More specifically, the user may use two thumbs to operate the opposite direction key modules so as to finish all the input operations without operating several keys (usually more than ten keys) to finish the inputting operation as in the prior art. Thus, the user can input information more rapidly and conveniently using the input interface of the invention.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. An information input method applied to an electronic device, which comprises a host body, a first direction key module and a second direction key module, wherein the host body is electrically connected to the first direction key module and the second direction key module, the information input method comprising the steps of:
generating a first input signal, a second input signal, a third input signal, a fourth input signal or a fifth input signal by operation of the first direction key module;
generating a sixth input signal, a seventh input signal, an eighth input signal, a ninth input signal, or a tenth input signal by operation of the second direction key module;
receiving the first input signal, the second input signal, the third input signal, the fourth input signal, the fifth input signal, the sixth input signal, the seventh input signal, the eighth input signal, the ninth input signal, or the tenth input signal by the host body; and
generating a first standard key signal, a second standard key signal, a third standard key signal, a fourth standard key signal, a fifth standard key signal, a sixth standard key signal, a seventh standard key signal, an eighth standard key signal, a ninth standard key signal or a tenth standard key signal by the host body according to the first input signal, the second input signal, the third input signal, the fourth input signal, the fifth input signal, the sixth input signal, the seventh input signal, the eighth input signal, the ninth input signal, or the tenth input signal.

2. The information input method according to claim 1, wherein the first direction key module generates the first input signal when the first direction key module is operated in an upward direction, the first direction key module generates the second input signal when the first direction key module is operated in a leftward direction, the first direction key module generates the third input signal when the first direction key module is operated in a downward direction, the first direction key module generates the fourth input signal when the first direction key module is operated in a rightward direction, and the first direction key module generates the fifth input signal when the first direction key module is operated in a vertically downward direction.

3. The information input method according to claim 1, wherein the second direction key module generates the sixth input signal when the second direction key module is operated in an upward direction, the second direction key module generates the seventh input signal when the second direction key module is operated in a leftward direction, the second direction key module generates the eighth input signal when the second direction key module is operated in a downward direction, the second direction key module generates the ninth input signal when the second direction key module is operated in a rightward direction, and the second direction key module generates the tenth input signal when the second direction key module is operated in a vertically downward direction.

4. The information input method according to claim 3, wherein the first input signal is a key "1" signal, the second input signal is a key "2" signal, the third input signal is a key "3" signal, the fourth input signal is a key "4" signal, the fifth input signal is a key "5" signal, the sixth input signal is a key "6" signal, the seventh input signal is a key "7" signal, the eighth input signal is a key "8" signal, the ninth input signal is a key "9" signal, and the tenth input signal is a key "0" signal.

5. The information input method according to claim 1, wherein the electronic device further comprises a display module and the information input method further comprises the step of:
displaying a digit "1", "2", "3", "4", "5", "6", "7", "8", "9" or "0" by the display module according to the first standard key signal, the second standard key signal, the third standard key signal, the fourth standard key signal, the fifth standard key signal, the sixth standard key signal, the seventh standard key signal, the eighth standard key signal, the ninth standard key signal, or the tenth standard key signal.

6. The information input method according to claim 1, wherein the electronic device further comprises a display module and the information input method further comprises the step of:
displaying plural sets of text signals by the display module according to the first standard key signal, the second standard key signal, the third standard key signal, the fourth standard key signal, the fifth standard key signal, the sixth standard key signal, the seventh standard key signal, the eighth standard key signal, the ninth standard key signal, or the tenth standard key signal.

7. The information input method according to claim 6, wherein the plural sets of text signals comprising "A B C", "D E F", "G H I", "J K L", "M N O", "P Q R S", "T U V", "W X Y Z", and "@., / :".

8. The information input method according to claim 6, wherein the plural sets of text signals comprising " 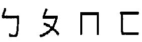 ", " 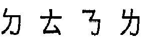 ", " 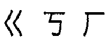 ", " 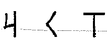 ", " 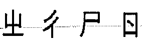 ", " 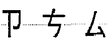 ", " 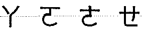 ", " 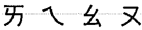 ", " 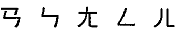 " and " 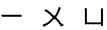 ".

9. The information input method according to claim 1, wherein the electronic device further comprises a third direction key module, and the information input method further comprises the step of:
generating a selection signal by the third direction key module.

10. The information input method according to claim 1, wherein the electronic device further comprises a function key, and the information input method further comprises the step of:
generating a selection signal by the function key.

11. An electronic device, comprising:
a host body;
a first direction key module, electrically connected to the host body, for generating a first input signal, a second input signal, a third input signal, a fourth input signal, or a fifth input signal; and
a second direction key module, electrically connected to the host body, for generating a sixth input signal, a seventh input signal, an eighth input signal, a ninth input signal or a tenth input signal, wherein when the host body receives the first input signal, the second input signal, the third input signal, the fourth input signal, the fifth input signal, the sixth input signal, the seventh input signal, the eighth input signal, the ninth input signal or the tenth input signal, the host body generates a first standard key signal, a second standard key signal, a third standard key signal, a fourth standard key signal, a fifth standard key signal, a sixth standard key signal, a seventh standard key signal, an eighth standard key signal, a ninth standard key signal, or a tenth standard key signal according to the first input signal, the second input signal, the third input signal, the fourth input signal, the fifth input signal, the sixth input signal, the seventh input signal, the eighth input signal, the ninth input signal or the tenth input signal.

12. The device according to claim 11, wherein the first direction key module generates the first input signal when the first direction key module is operated in an upward direction, the first direction key module generates the second input signal when the first direction key module is operated in a leftward direction, the first direction key module generates the third input signal when the first direction key module is operated in a downward direction, the first direction key module generates the fourth input signal when the first direction key module is operated in a rightward direction, and the first direction key module generates the fifth input signal when the first direction key module is operated in a vertically downward direction.

13. The device according to claim 11, wherein the second direction key module generates the sixth input signal when the second direction key module is operated in an upward direction, the second direction key module generates the seventh input signal when the second direction key module is operated in a leftward direction, the second direction key module generates the eighth input signal when the second direction key module is operated in a downward direction, the second direction key module generates the ninth input signal when the second direction key module is operated in a rightward direction, and the second direction key module generates the tenth input signal when the second direction key module is operated in a vertically downward direction.

14. The device according to claim 11, wherein the first input signal, the second input signal, the third input signal, the fourth input signal, the fifth input signal, the sixth input signal, the seventh input signal, the eighth input signal, the ninth input signal and the tenth input signal respectively correspond to a plurality of input signals of a standard keyboard satisfying Committee of International Telegraph & Telephone (CCITT) specifications.

15. The device according to claim 14, wherein the first input signal is a key "1" signal, the second input signal is a key "2" signal, the third input signal is a key "3" signal, the fourth input signal is a key "4" signal, the fifth input signal is a key "5" signal, the sixth input signal is a key "6" signal, the seventh input signal is a key "7" signal, the eighth input signal is a key "8" signal, the ninth input signal is a key "9" signal, and the tenth input signal is a key "0" signal.

16. The device according to claim 11, further comprising:
a display module for displaying a digit "1", "2", "3", "4", "5", "6", "7", "8", "9" or "0" according to the first standard key signal, the second standard key signal, the third standard key signal, the fourth standard key signal, the fifth standard key signal, the sixth standard key signal, the seventh standard key signal, the eighth standard key signal, the ninth standard key signal, or the tenth standard key signal.

17. The device according to claim 11, further comprising:
a display module for displaying plural sets of text signals according to the first standard key signal, the second standard key signal, the third standard key signal, the fourth standard key signal, the fifth standard key signal, the sixth standard key signal, the seventh standard key signal, the eighth standard key signal, the ninth standard key signal, or the tenth standard key signal.

18. The device according to claim 17, wherein the plural sets of text signals comprising "A B C", "D E F", "G H I", "J K L", "M N O", "P Q R S", "T U V", "WXYZ",and"@.,/:".

19. The device according to claim 17, wherein the plural sets of text signals comprising " 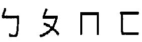 ", " 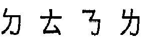 ", " 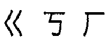 ", " 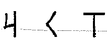 ", " 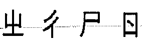 ", " 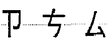 ", " 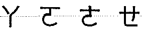 ", " 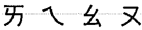 ", " 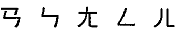 " and " 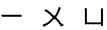 ".

20. The device according to claim 11, further comprising:
a third direction key module for generating a selection signal.

21. The device according to claim 11, further comprising:
a function key for generating a selection signal.
